# EUROPEAN PATENT SPECIFICATION

(11) **EP 2 713 249 B1**
(45) Date of publication and mention of the grant of the patent: **09.08.2017**
(21) Application number: 13020041.3
(22) Date of filing: 14.06.2013
(51) Int. Cl.: G06F 3/044, G06F 3/041, G06F 3/042

(54) **Touch display module and handheld electronic apparatus**
Berührungsdisplaymodul und tragbare elektronische Vorrichtung
Module d'affichage tactile et appareil électronique portatif

(30) Priority: 28.09.2012 US 201213629622
(43) Date of publication of application: 02.04.2014
(73) Proprietor: HTC Corporation, Taoyuan City 330 (TW)
(72) Inventor: Lo, Pi-Lin, 330 Taoyuan City (TW); Hsueh, Yi-Fan, 330 Taoyuan City (TW); Lin, Yen-Cheng, 330 Taoyuan City (TW); Chen, Te-Mu, 330 Taoyuan City (TW)
(74) Representative: Emde, Eric

(56) References cited:
- EP-A2- 2 500 803
- US-A1- 2009 267 913
- US-A1- 2010 321 326
- US-A1- 2011 279 402
- US-A1- 2011 304 564
- US-A1- 2012 105 339
- US-A1- 2012 169 626

## Description

### BACKGROUND OF THE INVENTION

### [Field of the Invention]

The application relates to a handheld electronic apparatus and particularly relates to a handheld electronic apparatus with a touch display module.

### [Description of Related Art]

In the era of information, people are becoming more and more dependent on consumer electronic devices. For example, mobile phones, PDAs, and tablet PCs are used everywhere in our life, and therefore, the consumer electronic devices have become an indispensable part of our life. In order to be more convenient for use, more light-weighted, and more user-friendly, the input devices of many products, such as the conventional keyboards and mice, have been replaced with touch panels.

Based on different sensing types, touch panels can be generally categorized into a resistive touch panel, a capacitive touch panel, an optical touch panel, an acoustic-wave touch panel, and an electromagnetic touch panel. Compared with other types of touch panels, the capacitive touch panel has the advantages of short response time, favorable reliability, high definition, etc. and is therefore widely used in various types of handheld electronic apparatus.

The capacitive touch panel uses multiple sensing series that intersect each other to form a sensing array so as to achieve surface sensing. When a user touches the touch panel with a finger, the touch panel determines the position touched by the finger according to the capacitance variation on the sensing array. Nevertheless, there are many wirings disposed outside the sensing array of the touch panel. To prevent the wirings from being exposed and affecting the appearance of the electronic device, a shielding area usually needs to be formed on the transparent cover of the electronic device to cover the wirings, but it will increase the production costs. Also, when the user operates the touch panel, a capacitance coupling effect may easily occur between the finger and the wirings and affect the sensing accuracy of the touch panel. In addition, when the electronic device is in operation, the electronic components in the electronic device may generate an electromagnetic field easily, which affects the performance of the touch panel with interaction between voltage and current.

US 2012/0169626 A1 discloses a touch panel including a substrate, a plurality of driving electrode series and a plurality of sensing electrode series. The plurality of driving electrode series extending along a first direction is disposed on the substrate. The plurality of sensing electrode series extending along a second direction different from the first direction is disposed on the substrate. The plurality of driving electrode series and the plurality of sensing electrode series are intersected to constitute a plurality of sensing units, in which each sensing unit has a center region and a surrounding region. A first electrode spacing is formed between the driving electrode series and the sensing electrode series disposed in the center region, and a second electrode spacing is formed between the driving electrode series and the sensing electrode series disposed in the surrounding region. The second electrode spacing is smaller than the first electrode spacing.

US 2011/0304564 A1 discloses a liquid crystal display device which includes a liquid crystal panel including first and second substrates and a liquid crystal layer formed therebetween, a shielding electrode formed throughout the entire rear surface of the second substrate of the liquid crystal panel, a first polarizing plate formed on the shielding electrode, a third substrate formed above the first polarizing plate and including intersecting first and second electrodes, a touch FPC including a touch drive IC to control driving and sensing of the first and second electrodes, and a printed circuit board formed at one side of the liquid crystal panel and generating a main panel control signal to control driving of the liquid crystal panel, a touch control signal to control the touch drive IC, and a voltage signal. Document EP2500803 discloses a touch device having a sensing area and a peripheral area surrounding the sensing area. The touch device comprises a substrate having a first surface and a second surface opposite to the first surface, wherein the first surface is a touch side. A sensing electrode is disposed on the second surface of the substrate and a major part of the sensing electrode is disposed at the sensing area. A mask layer is disposed on the second surface of the substrate and at the peripheral area. A signal conveying trace is electrically connected to the sensing electrode and covered by the mask layer. An induced layer is disposed on the mask layer. An insulating layer is disposed between the induced layer and the signal conveying trace as well as between the induced layer and the sensing electrode. A conductive layer is disposed on the induced layer and electrically connected with the induced layer.

### SUMMARY OF THE INVENTION

The application provides a touch display module which includes a display panel and a touch panel. The touch panel is disposed on the display panel and includes a sensing section and a bonding section outside the sensing section. The touch panel includes a first substrate, a plurality of driving lines, a plurality of sensing lines, a plurality of routing traces, and a shielding pattern. The first substrate has a first surface and a second surface opposite to the first surface, wherein the second surface faces toward the display panel. The driving lines are arranged in parallel on the first surface and respectively extend in a first direction. The sensing lines are arranged in parallel on the second surface and respectively extend in a second direction, wherein the first direction intersects the second direction. The driving lines and the sensing lines form a sensing array in the sensing section. The routing traces are disposed on the second surface outside the sensing section. The routing traces are respectively shielding pattern is disposed on the first surface, and a vertical projection of the shielding pattern on the second surface covers the routing traces.

The application further provides a handheld electronic apparatus which includes a body and the touch display module. The body has a display opening, and the touch display module is disposed in the display opening.

Based on the above, in the touch display module of the application, the shielding pattern is used to cover the routing traces below to prevent exposing the routing traces. When the touch display module is touched by a user, the shielding pattern insulates and protects the routing traces and prevents the normal operation of the handheld electronic apparatus from a capacitance coupling effect that is generated when an object contacts the routing traces. In addition, when the shielding pattern is grounded, electrostatic charges accumulated during fabrication or assembly are released to prevent electrostatic discharge (ESD) or electromagnetic interference (EMI), which occurs when the electronic apparatus is operative, from damaging the sensing wirings.

To make the aforementioned and other features and advantages of the application more comprehensible, several embodiments accompanied with figures are described in detail below.

### BRIEF DESCRIPTION OF THE DRAWINGS

The accompanying drawings are included to provide a further understanding of the application, and are incorporated in and constitute a part of this specification. The drawings illustrate exemplary embodiments of the application and, together with the description, serve to explain the principles of the application.
FIG. 1A illustrates a touch display module according to an embodiment of the application.
FIG 1B illustrates the touch display module of FIG. 1A in contact with an external conductor.
FIG 2 is a top view of the touch display module of FIG 1A.
FIG 3 illustrates a handheld electronic apparatus with the touch display module of FIG 1A.

### DESCRIPTION OF THE EMBODIMENTS

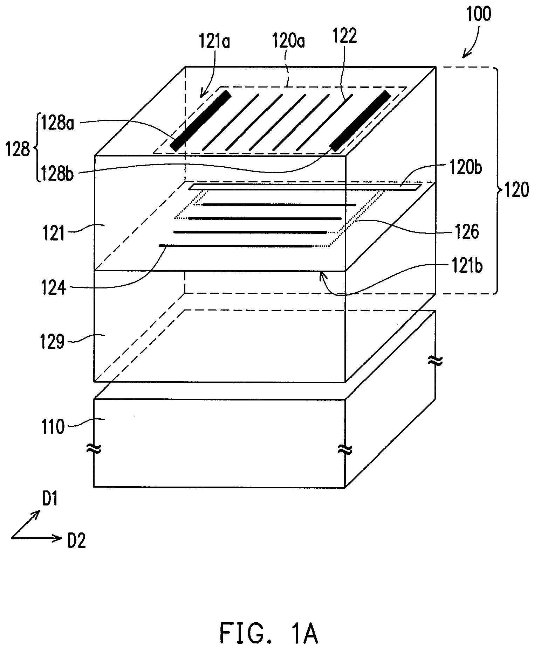

FIG. 1A illustrates a touch display module according to an embodiment of the application. To clearly illustrate the disclosure, some films or elements may be omitted from FIG. 1A. As shown in FIG. 1A, a touch display module 100 of this embodiment includes a display panel 110 and a touch panel 120. The touch panel 120 is disposed on the display panel 110 and has a sensing section 120a and a bonding section 120b outside the sensing section 120a. The touch panel 120 includes a first substrate 121, a plurality of driving lines 122, a plurality of sensing lines 124, a plurality of routing traces 126, and a shielding pattern 128. The first substrate 121 has a first surface 121 a and a second surface 121b opposite to the first surface 121 a, wherein the second surface 121b faces toward the display panel 110. The driving lines 122 are arranged in parallel on the first surface 121a and extend in a first direction D1. The first direction D1 of the driving lines is perpendicular to a longitudinal direction of the bonding section 120b. The sensing lines 124 are arranged in parallel on the second surface 121b and extend in a second direction D2, wherein the first direction D1 intersects the second direction D2. The driving lines 122 and the sensing lines 124 form a sensing array in the sensing section 120a. The routing traces 126 are disposed on the second surface 121b outside the sensing section 120a. The routing traces 126 are respectively electrically connected with the sensing lines 124 and extend to the bonding section 120b. The shielding pattern 128 is disposed on the first surface 121a, and a vertical projection of the shielding pattern 128 on the second surface 121b covers the routing traces 126.

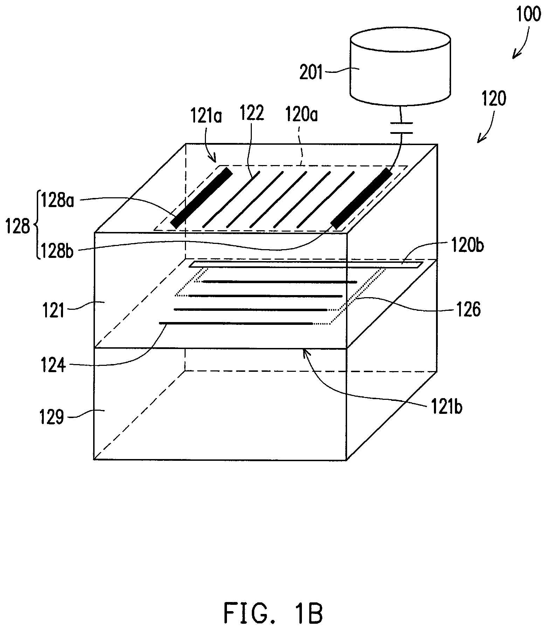

FIG. 1B illustrates the touch display module of FIG. 1A in contact with an external conductor. In this embodiment, the driving lines 122 and the sensing lines 124 of the touch display module 100 form an array in the sensing section 120a for detecting a position of the sensing section 120a touched by the user and transmitting a signal. The vertical projection of the shielding pattern 128, disposed on the first surface 121a, on the second surface 121b covers the routing traces 126. When an external conductor 201 (e.g. a finger of the user) contacts the first surface 121a above the routing traces 126, the shielding pattern 128 protects the routing traces 126 connected with the sensing lines 124 and prevents generation of capacitance, which may affect the performance of the touch display module 100.

Configuration of the lines in the embodiment of FIG. 1A is explained in detail below. The driving lines 122 arranged in parallel in the first direction D1 and the sensing lines 124 arranged in parallel in the second direction D2 are spaced by a fixed interval, so as to form the array with equal spaces in the sensing section 120a to improve the accuracy of sensing. The routing traces 126 are disposed on two opposite sides of the sensing array. More specifically, in this embodiment, the driving lines 122 and the sensing lines 124 are disposed to intersect each other (vertically). In order to output a sensing signal sent by the driving lines 122 and the sensing lines 124 from an output position of the bonding section 120b on the touch display module 100, the sensing lines 124 need to be electrically connected with the routing traces 126, and an extending direction of the routing traces 126 needs to be the same as the driving lines 122, so as to transmit the sensing signal sent by the sensing lines 124 to the output position of the bonding section 120b via the routing traces 126. The routing traces 126 are disposed in an area outside the sensing section 120a. To avoid increasing the size of a frame of the touch display module 100, a line width of each of the routing traces 126 and the interval between the routing traces 126 are made as small as possible.

The shielding pattern 128 includes a first sub-pattern 128a and a second sub-pattern 128b. The first sub-pattern 128a and the second sub-pattern 128b are disposed on two opposite sides of the sensing array and corresponding located above the routing traces 126. The shielding pattern 128 not only protects and prevents the routing traces 126 from sensing and generating capacitance but can be grounded to prevent the touch display module 100 from being affected by electromagnetic interference (EMI) or electrostatic discharge (ESD), and such grounding method may be, for example, co-constructed with the ground wiring of the touch display module 100. The shielding pattern 128 may be formed of a metallic wiring or a conductive material, such as Indium Tin Oxide (ITO). In this embodiment, the shielding pattern 128 is formed of a metallic material. In a fabrication of the touch display module 100, the shielding pattern 128 and the driving lines 122 may be fabricated in different processes. Otherwise, the shielding pattern 128 and the driving lines 122 may be formed of a transparent conductive material, such as ITO. However, it is noted that the application is not limited to the above. In addition, a printed layer (for example, printing a black coating, a white coating, or a coating of other color) may be further disposed above the shielding pattern 128 for marking the sensing section 120a and the bonding section 120b and preventing the user from seeing the bonding section 120b.

In this embodiment, the touch panel 120 further includes a second substrate 129 disposed on the second surface 121b, and the sensing lines 124 are located between the first substrate 121 and the second substrate 129. The first substrate 121 and the second substrate 129 are transparent substrates formed of glass or Polyethylene Terephthalate (PET), for example. Furthermore, an optical adhesive may be applied between the first substrate 121 and the second substrate 129 to bond the first substrate 121 with the second substrate 129. The optical adhesive has a high light transmittance coefficient and thus does not affect the quality of the displayed image. However, it is noted that the application is not limited to the above.

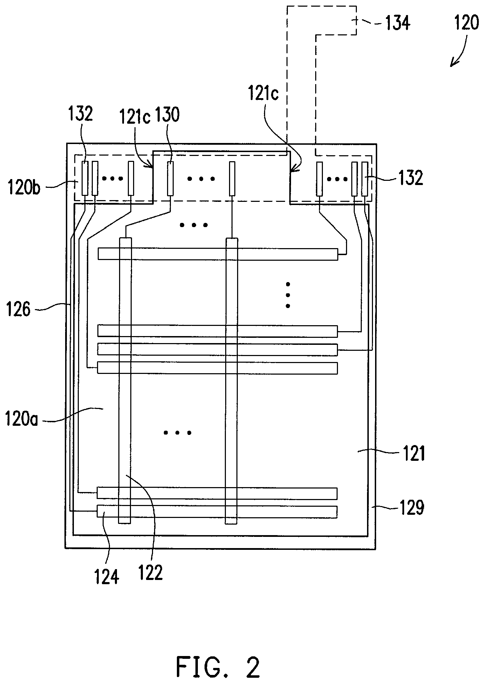

FIG. 2 is a top view of the touch display module of FIG. 1A. Referring to FIG. 2, in this embodiment, the touch panel 120 further includes a plurality of first pads 130 and a plurality of second pads 132. The first pads 130 are disposed on the first substrate 121 and arranged in parallel in the bonding section 120b, for example. The first pads 130 are electrically connected with the driving lines 122 respectively. The second pads 132 are disposed on the second substrate 129 and arranged in parallel in the bonding section 120b, and the second pads 132 are electrically connected with the sensing lines 124 respectively, wherein the first substrate 121 has an opening 121c (two are depicted in the figure) to expose the second pads 132. More specifically, the sensing lines 124 are electrically connected with the second pads 132 via the routing traces 126, and the routing traces 126 are configured on two sides of the sensing lines 124. Accordingly, the second pads 132 are disposed on two sides of the second substrate 129. On the first pads 130 and the second pads 132, a flexible circuit board 134 may be further disposed for outputting the sensing signal from the driving lines 122 and the sensing lines 124.

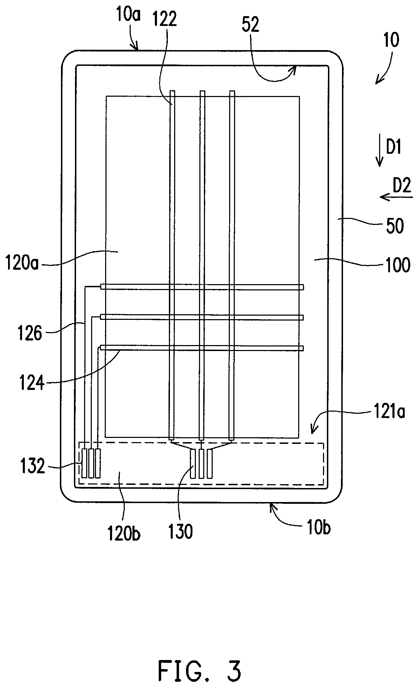

FIG. 3 illustrates a handheld electronic apparatus with the touch display module of FIG. 1A. Referring to FIG. 3, a handheld electronic apparatus 10 includes a body 50 and the touch display module 100. The body 50 has a display opening 52, and the touch display module 100 is disposed in the display opening 52. The handheld electronic apparatus 10 is a smart phone or a tablet computer, for example. The driving lines 122 may include a plurality of routing traces formed by printing a metal layer (e.g. silver) on the first surface 121a by a printing process. According to the current technology, when the printing process is used to form the wirings, a minimum of a line width of a routing trace portion of each driving line 122 and an interval between the routing trace portions of two adjacent driving lines 122 is 60µm (micrometer). In addition, the sensing lines 124 and the routing traces 126 may be formed by fabricating a plurality of wirings on a film material having a metal layer by a photolithographic etching process. According to the current technology, when the photolithographic etching process is used to form the wirings, a minimum of a line width of each sensing line 124 and each routing trace 126 and an interval (i.e. line distance) between two adjacent sensing lines 124 and each routing trace 126 is 30µm (micrometer). In other words, the line width and the line distance of the sensing line 124 and the routing trace 126 are less than the line width and the line distance of the routing trace portion of the driving line 122. Moreover, when the printing process is used to form the routing trace portions of the driving lines 122, and the photolithographic etching process is used to form the sensing lines 124 and the routing traces 126, a surface roughness of the sensing lines 124 and the routing traces 126 is less than a surface roughness of the routing trace portions of the driving lines 122.

In this embodiment, the driving lines 122 and the sensing lines 124 are strip-shaped electrodes. Nevertheless, the driving lines 122 and the sensing lines 124 may have a diamond shape or other shapes.

When the touch display module 100 disclosed in the above embodiment is applied to the handheld electronic apparatus 10, the first direction D1 along which the driving lines 122 extend extends from a top 10a to a bottom 10b of the handheld electronic apparatus 10. The second direction D2 along which the sensing lines 124 extend extends from a right side to a left side of the handheld electronic apparatus 10. The reason for defining the second direction D2 to extend from the right side to the left side of the handheld electronic apparatus 10 is that the routing traces 126 are disposed on two sides of the sensing lines 124 and the widths of the routing traces 126 affect the widths of two margins outside the sensing section 120a in the touch display module 100. If the routing traces 126 have smaller line widths and intervals, the widths of the two margins outside the sensing section 120a are effectively reduced to narrow a frame of the handheld electronic apparatus 10.

In conclusion of the above, in the touch display module of the application, the shielding pattern is disposed on the first surface, and the vertical projection thereof on the second surface covers the routing traces. When the touch display module is touched, the shielding pattern insulates and protects the operation of the handheld electronic apparatus from the capacitance that is generated when an object contacts the routing traces. The shielding pattern not only protects the routing traces but can be grounded to prevent EMI or ESD. Moreover, when the touch display module of the application is applied to the handheld electronic apparatus, on the second substrate having the routing traces and the sensing lines thereon, the etching process can be used to form wirings with smaller line width and interval to reduce the widths of the two margins outside the sensing section, such that the handheld electronic apparatus has a narrow frame.

## Claims

1. A touch display module (100), comprising:
a display panel (110);
a touch panel (120) disposed on the display panel and having a sensing section (120a) and a bonding section (120b) outside the sensing section (120a), and the touch panel (120) further comprising:
a first substrate (121) comprising a first surface (121a) and a second surface (121b) opposite to the first surface (121a), wherein the second surface (121b) faces toward the display panel (110);
a plurality of driving lines (122) arranged in parallel on the first surface (121a) and respectively extending in a first direction (D1);
a plurality of sensing lines (124) arranged in parallel on the second surface (121b) and respectively extending in a second direction (D2), wherein the first direction (D1) intersects the second direction (D2), and the driving lines (122) and the sensing lines (124) form a sensing array in the sensing section (120a);
a plurality of routing traces (126) disposed on the second surface (121b) outside the sensing section (120a), the routing traces (126) being respectively electrically connected with the sensing lines (124) and extending to the bonding section (120b); and
a shielding pattern (128) disposed on the first surface (121a), and a vertical projection of the shielding pattern (128) on the second surface (121b) covering the routing traces (126).

2. The touch display module according to claim 1, wherein the first direction (D1) of the driving lines (122) is perpendicular to a longitudinal direction of the bonding section (120b).

3. The touch display module according to claim 1, wherein a surface roughness of the sensing lines (124) and the routing traces (126) is less than a surface roughness of a routing trace portion of the driving lines (122).

4. The touch display module according to claim 3, wherein the sensing lines (124) and the routing traces (126) are formed by a photolithographic etching process and the routing trace portion of the driving lines (122) are formed by a printing process.

5. The touch display module according to claim 3, wherein a width of each of the sensing lines (124) and each of the routing traces (126) is less than a width of the routing trace portion of each of the driving lines (122).

6. The touch display module according to claim 1, wherein the routing traces (126) are respectively disposed on two opposite sides of the sensing array, and the shielding pattern (128) comprises a first sub-pattern (128a) and a second sub-pattern (128b) respectively located on two opposite sides of the sensing array and above the routing traces (126).

7. The touch display module according to claim 1, wherein the touch panel (120) further comprises a second substrate (129) disposed on the second surface (121b), and the sensing lines (124) are located between the first substrate (121) and the second substrate (129).

8. The touch display module according to claim 7, wherein the touch panel (120) further comprises:
a plurality of first pads (130) disposed on the first surface (121a) and arranged in parallel in the bonding section (120b), and the first pads (130) being electrically connected with the driving lines (122) respectively; and
a plurality of second pads (132) disposed on the second substrate (129) and arranged in parallel in the bonding section (120b), and the second pads (132) being electrically connected with the sensing lines (124) respectively, wherein the first substrate (121) has an opening (121c) to expose the second pads (132).

9. The touch display module according to claim 1, wherein the shielding pattern (128) is grounded.

10. The touch display module according to claim 1, wherein a material of the shielding pattern (128) comprises a metal.

11. A handheld electronic apparatus (10), comprising:
a body (50) comprising a display opening (52); and
the touch display module (100) of claim 1 disposed in the display opening (52).

## Patentansprüche

1. Ein Modul einer berührungsempfindlichen Anzeige bzw. ein Touch-Display-Modul (100), das Folgendes aufweist:
ein Anzeigepanel (110);
ein berührungsempfindliches Panel bzw. Touch-Panel (120), das auf dem Anzeigepanel angeordnet ist und einen Abfühlabschnitt (120a) und einen Verbindungs- bzw. Bondingabschnitt (120a) hat, und wobei das Touch-Panel (120) weiter Folgendes aufweist:
ein erstes Substrat (121), das eine erste Oberfläche (121a) und eine zweite Oberfläche (121b) gegenüber der ersten Oberfläche (121 a) aufweist, wobei die zweite Oberfläche (121b) in Richtung des Anzeigepanels (110) weist;
eine Vielzahl von Treiberleitungen (122), die parallel auf der ersten Oberfläche (121a) angeordnet sind und sich jeweils in eine erste Richtung (D1) erstrecken;
eine Vielzahl von Abfühlleitungen (124), die parallel auf der zweiten Oberfläche (121b) angeordnet sind und sich jeweils in einer zweiten Richtung (D2) erstrecken, wobei sich die erste Richtung (D1) und die zweite Richtung (D2) überkreuzen, und die Treiberleitungen (122) und die Abfühlleitungen (124) eine Abfühlanordnung in dem Abfühlabschnitt (120a) bilden;
eine Vielzahl von Weiterleitungs- bzw. Routing-Bahneri (126), die auf der zweiten Oberfläche (121b) außerhalb des Abfühlabschnittes (120a) angeordnet sind, wobei die Weiterleitungsbahnen (126) jeweils elektrisch mit den Abfühlleitungen (124) verbunden sind und sich zu dem Verbindungs- bzw. Bondingabschnitt (120b) erstrecken; und
ein Abschirmmuster (128), das auf der ersten Oberfläche (121a) angeordnet ist, und wobei eine vertikale Projektion des Abschirmmusters (128) auf der zweiten Oberfläche (121 b) die Weiterleitungsbahnen (126) abdeckt.

2. Touch-Display-Modul nach Anspruch 1, wobei die erste Richtung (D1) der Treiberleitungen (122) senkrecht zu einer Längsrichtung des Verbindungs- bzw. Bondingabschnittes (120b) ist.

3. Touch-Display-Modul nach Anspruch 1, wobei eine Oberflächenrauheit der Abfühlleitungen (124) und der Weiterleitungsbahnen (126) geringer ist als eine Oberflächenrauheit eines Weiterleitungsbahnteils der Treiberleitungen (122).

4. Touch-Display-Modul nach Anspruch 3, wobei die Abfühlleitungen (124) und die Weiterleitungsbahnen (126) durch einen photolithographischen Ätzprozess gebildet werden und der Weiterleitungsbahnteil der Treiberleitungen (122) durch einen Druckprozess gebildet wird.

5. Touch-Display-Modul nach Anspruch 3, wobei eine Breite jeder der Abfühlleitungen (124) und jeder der Weiterleitungsbahnen (126) geringer ist als eine Breite des Weiterleitungsbahnteils jeder der Treiberleitungen (122).

6. Touch-Display-Modul nach Anspruch 1, wobei die Weiterleitungsbahnen (126) jeweils auf zwei gegenüberliegenden Seiten der Abfühlanordnung angeordnet sind, und das Abschirmmuster (128) ein erstes Sub-Muster (128a) und ein zweites Sub-Muster (128b) aufweist, die jeweils auf zwei gegenüberliegenden Seiten der Abfühlanordnung und über den Weiterleitungsbahnen (126) angeordnet sind.

7. Touch-Display-Modul nach Anspruch 1, wobei das Touch-Panel (120) weiter ein zweites Substrat (129) aufweist, das auf der zweiten Oberfläche (121b) angeordnet ist, und wobei die Abfühlleitungen (124) zwischen dem ersten Substrat (121) und dem zweiten Substrat (129) angeordnet sind.

8. Touch-Display-Modul nach Anspruch 7, wobei das Touch-Panel (120) weiter Folgendes aufweist:
eine Vielzahl erster Kontaktfelder bzw. Pads (130), die auf der ersten Oberfläche (121 a) angeordnet sind und parallel in dem Verbindungs- bzw. Bondingabschnitt (120b) angeordnet sind, und wobei die ersten Pads (130) jeweils elektrisch mit den Treiberleitungen (122) verbunden sind; und
eine Vielzahl von zweiten Kontaktfeldern bzw. Pads (132), die auf dem zweiten Substrat (129) angeordnet sind und parallel in dem Verbindungs- bzw. Bondingabschnitt (120b) angeordnet sind, und wobei die zweiten Pads (132) jeweils elektrisch mit den Abfühlleitungen (124) verbunden sind, wobei das erste Substrat (121) eine Öffnung (121c) hat, um die zweiten Pads (132) freizulegen.

9. Touch-Display-Modul nach Anspruch 1, wobei das Abschirmmuster (128) geerdet ist.

10. Touch-Display-Modul nach Anspruch 1, wobei ein Material des Abschirmmusters (128) ein Metall aufweist.

11. Eine in der Hand gehaltene elektronische Vorrichtung (10), die Folgendes aufweist:
einen Körper (50), der eine Anzeigeöffnung (52) aufweist; und
ein Modul einer berührungsempfindlichen Anzeige bzw. ein Touch-Display-Modul (100) nach Anspruch 1, das in der Anzeigeöffnung (52) angeordnet ist.

## Revendications

1. Module d'affichage tactile (100) comprenant :
un panneau d'affichage (110) ;
un panneau tactile (120) disposé sur le panneau d'affichage et ayant une section de détection (120a) et une section de liaison (120b) à l'extérieur de la section de détection (120a), et le panneau tactile (120) comprenant en outre :
un premier substrat (121) comprenant une première face (121a) et une deuxième face (121b) opposée à la première face (121a), la deuxième face (121b) étant orientée vers le panneau d'affichage (110) ;
une pluralité de lignes de commande (122) agencées en parallèle sur la première face (121a) et s'étendant respectivement dans une première direction (D1) ;
une pluralité de lignes de détection (124) agencées en parallèle sur la deuxième face (121b) et s'étendant respectivement dans une deuxième direction (D2), la première direction (D1) coupant la deuxième direction (D2), et les lignes de commande (122) et les lignes de détection (124) formant un réseau de détection dans la section de détection (120a) ;
une pluralité de pistes de routage (126) disposées sur la deuxième face (121b) à l'extérieur de la section de détection (120a), les pistes de routage (126) étant respectivement connectées électriquement aux lignes de détection (124) et s'étendant jusqu'à la section de liaison (120b) ; et
un motif de blindage (128) disposé sur la première face (121a), et une partie saillante verticale du motif de blindage (128) sur la deuxième face (121b) couvrant les pistes de routage (126).

2. Module d'affichage tactile selon la revendication 1, dans lequel la première direction (D1) des lignes de commande (122) est perpendiculaire à une direction longitudinale de la section de liaison (120b).

3. Module d'affichage tactile selon la revendication 1, dans lequel la rugosité de surface des lignes de détection (124) et des pistes de routage (126) est inférieure à la rugosité de surface de la portion de piste de routage des lignes de commande (122).

4. Module d'affichage tactile selon la revendication 3, dans lequel les lignes de détection (124) et les pistes de routage (126) sont formées par un procédé de gravure photolithographique et la portion de piste de routage des lignes de commande (122) est formée par un procédé d'impression.

5. Module d'affichage tactile selon la revendication 3, dans lequel la largeur de chacune des lignes de détection (124) et de chacune des pistes de routage (126) est inférieure à la largeur de la portion de piste de routage de chacune des lignes de commande (122).

6. Module d'affichage tactile selon la revendication 1, dans lequel les pistes de routage (126) sont disposées respectivement sur deux côtés opposés de la matrice de détection, et le motif de blindage (128) comprend un premier sous-motif (128a) et un deuxième sous-motif (128b) situés respectivement sur deux côtés opposés de la matrice de détection et au-dessus des pistes de routage (126).

7. Module d'affichage tactile selon la revendication 1, dans lequel le panneau tactile (120) comprend en outre un deuxième substrat (129) disposé sur la deuxième face (121b), et les lignes de détection (124) sont situées entre le premier substrat (121) et le deuxième substrat (129).

8. Module d'affichage tactile selon la revendication 7, dans lequel le panneau tactile (120) comprend en outre :
une pluralité de premiers plots (130) disposés sur la première face (121a) et agencés en parallèle dans la section de liaison (120b), les premiers plots (130) étant connectés électriquement aux lignes de commande (122) respectivement ; et
une pluralité de deuxièmes plots (132) disposés sur le deuxième substrat (129) et agencés en parallèle dans la section de liaison (120b), les deuxièmes plots (132) étant connectés électriquement aux lignes de détection (124) respectivement, le premier substrat (121) ayant une ouverture (121c) pour exposer les deuxièmes plots (132).

9. Module d'affichage tactile selon la revendication 1, dans lequel le motif de blindage (128) est relié à la masse.

10. Module d'affichage tactile selon la revendication 1, dans lequel un matériau du motif de blindage (128) comprend du métal.

11. Appareil électronique portable à la main (10), comprenant :
un corps (50) comprenant une ouverture d'affichage (52) ; et
le module d'affichage tactile (100) de la revendication 1 disposé dans l'ouverture d'affichage (52).
